(19) Europäisches Patentamt
European Patent Office
Office européen des brevets

(11) **EP 2 453 595 A1**

(12) **EUROPEAN PATENT APPLICATION**

(43) Date of publication:
**16.05.2012 Bulletin 2012/20**

(51) Int Cl.:
***H04B 17/00*** *(2006.01)*

(21) Application number: **10190713.7**

(22) Date of filing: **10.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Research In Motion Limited**
**Waterloo, ON N2L 3W8 (CA)**

(72) Inventors:
• **Weng, Jianfeng**
 **Kanata Ontario K2K 3K2 (CA)**
• **Behnamfar, Firouz**
 **Kanata Ontario K2K 3K2 (CA)**

(74) Representative: **Moore, Barry et al**
 **Hanna Moore & Curley**
 **13 Lower Lad Lane**
 **Dublin 2 (IE)**

(54) **Method and device for improved user equipment measurements and reporting**

(57) A method and electronic device for improved filtering of mobile communications device physical layer measurement ratios to reduce the variance of reported measurements. First and second signal powers of a cell in a mobile communications network are measured and a filter having a network determined filter coefficient is applied to the first signal power. A signal quality value is determined from the filtered first signal power and the second signal power. A second filter with a network determined filter coefficient may be applied to the second signal power. An example signal quality value comprises a reference signal received quality (RSRQ) comprised of the ratio of reference signal received power (RSRP), multiplied by the number (N) of resource blocks of a carrier received signal strength indicator (RSSI), to the carrier RSSI.

200

205 — APPLY FIRST FILTER TO ONE OF A FIRST OR SECOND SIGNAL POWER, USING NETWORK DETERMINED FILTER COEFFICIENT

210 — DETERMINE SIGNAL QUALITY VALUE USING FILTERED SIGNAL POWER AND THE OTHER OF THE FIRST SIGNAL POWER AND SECOND SIGNAL POWER

**FIG. 2A**

EP 2 453 595 A1

**Description**

The present disclosure relates to a method and device for determining and reporting user equipment physical layer measurements in a mobile communications device. In particular, the disclosure relates to determining and reporting physical layer measurement ratios such as the reference signal received quality (RSRQ) measurement in Evolved Universal Terrestrial Radio Access (E-UTRA) or Long Term Evolution (LTE$^{TM}$) networks, the common pilot channel received energy per chip to the total received power spectral density (CPICH_Ec/lo) measurement in UTRA frequency division duplex (FDD) networks or the carrier to interference plus noise ratio (CINR) of IEEE 802.16e wireless network.

Mobile communications networks consist of a number of mobile communications devices, also referred to as user equipment (UE) or mobile stations, which are employed by end-users to communicate via a radio access network to one or more core networks. The radio access network covers a geographical area divided into a plurality of cells. Each cell is served by at least one base station which may be referred to as a Node B or an evolved Node B (eNB). The base station communicates at radio frequencies over an air interface with the mobile communications devices within range of the base station.

The mobile communications device collects and determines a number of measurements of the power and quality of signals in the downlink channel received by the mobile communications device from the base station. Measurements are reported from the mobile communications device to the base station. Measurements may be reported when predetermined criteria are met, such as a measurement value exceeding or falling below a predetermined threshold, when a predetermined condition is met by one or more measurements, or in response to a request by the base station for a report or a periodic report of one or more measurements.

The base station and mobile communications device each perform a number of functions based on the reported measurements including selection and reselection of a cell and base station and determining whether to initiate a handover or handoff process for a mobile communications device between cells and base stations in the network in order to allow the mobile communications device to maintain a radio connection with the network. For example, if measurements show that the quality of a cell currently serving the mobile communications device has decreased and fallen below a predetermined threshold or below the quality of a neighbouring cell, handover of the mobile communications device from the serving cell to the neighbouring or target cell may be initiated.

If measurements of the mobile communications device have a large variance due to, for example, fading, interference and noise, unnecessary measurement reports may be generated and sent from the mobile communications device to the base station. The communication of these measurement reports wastes bandwidth and also may result in unnecessary or pre-mature actions by the base station, such as unnecessary handover negotiations and unnecessary or pre-mature handover initiations. Improving the stability and accuracy of measurement reports helps to reduce bandwidth usage, avoid unnecessary actions such as handover negotiations or initiations, and trigger actions such as handover at the right time, resulting in improved network coverage.

The present disclosure provides a method and device for improved filtering and reporting of mobile communications device physical layer measurements to reduce the variance of reported measurements. Samples of a first and second signal power in a cell in a mobile communications network are collected. A first filter having a network determined filter coefficient is applied to the first signal power. In one embodiment, the first filter comprises an infinite impulse response (IIR) filter. A signal quality value is determined from the filtered first signal power and the second signal power. In one embodiment, the signal quality value comprises a ratio of the filtered first signal power and the second signal power. In one embodiment, a second filter having a second network determined filter coefficient is applied to the second signal power. Example first and second signal powers include a reference signal received power (RSRP) and a carrier received signal strength indicator (RSSI). An example ratio includes a reference signal received quality (RSRQ) comprised of the ratio of RSRP, multiplied by the number (N) of resource blocks of carrier RSSI measurement bandwidth, to the carrier RSSI. The first and second filters may comprise layer 3 filters. In response to the RSRQ ratio meeting predetermined criteria, the RSRQ ratio is transmitted from the mobile communications device to a base station.

According to one aspect there is provided a method in a mobile communications device, the method comprising: applying a first filter to one of a first signal power or a second signal power to create a filtered signal, the first filter comprising a first network determined coefficient; and determining a signal quality value using the filtered signal power and the other of the first signal power and the second signal power.

In one implementation, determining a signal quality value comprises determining a ratio of the filtered signal power and the other of the first signal power and the second signal power.

In one implementation, the method further comprises applying the first filter to the first signal power and applying a second filter to the second signal power, wherein determining the signal quality value comprises determining the signal quality value using the filtered first signal power and the filtered second signal power. In one implementation, the second filter comprises a second network determined coefficient. In another implementation, the first filter differs from the second filter. In one implementation having the first filter and the second filter, determining a signal quality value comprises determining a ratio of the filtered first signal power and the filtered second power.

In one implementation, the first signal power comprises a reference signal received power (RSRP), the second signal power comprises a carrier received signal strength indicator (RSSI) and determining the signal quality value comprises determining a reference signal received quality (RSRQ) ratio using the filtered signal power and the other of the first signal power and the second signal power.

In one implementation, the method of determining RSRQ as described in the previous implementation comprises applying the first filter to the RSRP, applying a second filter comprising a second network determined coefficient to the carrier RSSI and multiplying the filtered RSRP by a number (N) of resource blocks of carrier RSSI measurement bandwidth prior to determining the RSRQ ratio of the filtered RSRP times N to the filtered carrier RSSI.

In one implementation, the method further comprises collecting samples of the RSRP measurement and applying a first physical layer filter to the collected RSRP samples prior to applying the first filter and collecting samples of the carrier RSSI measurement and applying a second physical layer filter to the collected carrier RSSI samples prior to applying the second filter.

In one implementation, the filtered RSRP at time (n) is a function of the filtered RSRP at time (n-1) and a current RSRP value, and wherein the filtered carrier RSSI at time (n) is a function of the filtered carrier RSSI at time (n-1) and a current carrier RSSI value.

In one implementation the filtered RSRP at time (n) is represented by the equation:

$$F\_RSRP_n = (1 - a_1) \bullet F\_RSRP_{n-1} + a_1 \bullet M\_RSRP_n$$

where $F\_RSRP_{n-1}$ = the filtered RSRP value at time n - 1;
$M\_RSRP_n$ = the RSRP value at time n; and
$a_1 = 2^{-k_1/4}$ where $k_1$ is the first network determined coefficient; and wherein the filtered carrier RSSI at time (n) is represented by the equation:

$$F\_RSSI_n = (1 - a_2) \bullet F\_RSSI_{n-1} + a_2 \bullet M\_RSSI_n$$

where $F\_RSSI_{n-1}$ = the filtered carrier RSSI value at time n - 1;
$M\_RSSI_n$ = the carrier RSSI value at time n; and
$a_2 = 2^{-k2/4}$ where $k_2$ is the second network determined coefficient.

In one implementation, the method further comprises, in response to predetermined criteria being met, transmitting the RSRQ ratio to a base station. In one implementation, the predetermined criteria comprise the RSRQ ratio exceeding a predetermined value.

In one implementation, the method further comprises determining an RSRQ ratio of a cell serving the mobile communications device, determining an RSRQ ratio of at least one neighbouring cell and, in response to the RSRQ ratio of one of the at least one neighbouring cells exceeding the RSRQ ratio of the serving cell, transmitting a report to a serving base station.

In one implementation, the first signal power comprises a received energy per PN chip of a common pilot channel (CPICH_Ec) and the second signal power comprises a total received power density (Io).

According to another aspect there is provided a mobile communications device comprising: a transceiver for connecting to a cellular communications network; and the transceiver being configured to: apply a first filter to one of a first signal power or a second signal power to create a filtered signal, the first filter comprising a first network determined coefficient; and determine a signal quality value using the filtered signal power and the other of the first signal power and the second signal power.

In one implementation, the transceiver is further configured to determine the signal quality value as a ratio of the filtered signal power and the other of the first signal power and the second signal power.

In one implementation, the transceiver is further configured to apply the first filter to the first signal power and to apply a second filter to the second signal power, the second filter comprising a second network determined coefficient, and to determine the signal quality value using the filtered first signal power and the filtered second signal power.

In one implementation, the first signal power comprises a reference signal received power (RSRP), the second signal power comprises a carrier received signal strength indicator (RSSI) and wherein the transceiver is configured to determine a reference signal received quality (RSRQ) ratio using the filtered signal power and the other of the first signal power and the second signal power.

In one implementation, the transceiver is further configured to: apply the first filter to the RSRP, apply a second filter having a second network determined coefficient to the carrier RSSI, and to determine the RSRQ as a ratio of the filtered RSRP times a number (N) of resource blocks of carrier RSSI measurement bandwidth to the filtered carrier RSSI.

In one implementation, the filtered RSRP at time (n) is represented by the equation:

$$F\_RSRP_n = (1- a_1) \bullet F\_RSRP_{n-1} + a_1 \bullet M\_RSRP_n$$

where $F\_RSRP_{n-1}$ = the filtered RSRP value at time n - 1;
$M\_RSRP_n$ = the RSRP value at time n; and
$a_1 = 2^{-k_1/4}$ where $k_1$ is the first network determined coefficient; and wherein the filtered carrier RSSI at time (n) is represented by the equation:

$$F\_RSSI_n = (1- a_2) \bullet F\_RSSI_{n-1} + a_2 \bullet M\_RSSI_n$$

where $F\_RSSI_{n-1}$ = the filtered carrier RSSI value at time n - 1;
$M\_RSSI_n$ = the carrier RSSI value at time n; and
$a_2 = 2^{-k2/4}$ where $k_2$ is the second network determined coefficient.

In one implementation, the transceiver is further configured to transmit the RSRQ ratio to a base station in response to the RSRQ ratio exceeding a predetermined value.

In one implementation, the cellular communications network comprises an Evolved Universal Terrestrial Radio Access (E-UTRA) network.

In one implementation, the first signal power comprises a received energy per PN chip of a common pilot channel (CPICH_Ec) and the second signal power comprises a total received power density (Io).

According to another aspect there is provided a method of reporting a reference signal received quality (RSRQ) measurement ratio in a mobile communications device, the method comprising: applying a first layer 3 filter having a first network determined coefficient to a reference signal received power (RSRP) to create a numerator (F_RSRP); applying a second layer 3 filter having a second network determined coefficient to a carrier received signal strength indicator (RSSI) to create a denominator (F_RSSI); determining an RSRQ ratio of the numerator F_RSRP, multiplied by the number (N) of resource blocks of carrier RSSI measurement bandwidth, to the denominator F_RSSI; and in response to predetermined criteria being met, transmitting the RSRQ ratio to a base station.

According to another aspect there is provided a computer-readable storage medium in a mobile communications device, the medium having stored thereon computer-readable and computer-executable instructions, which, when executed by a transceiver, cause the mobile communications device to perform actions comprising: applying a first filter to one of a first signal power or a second signal power to create a filtered signal, the first filter comprising a first network determined coefficient; and determining a signal quality value using the filtered signal power and the other of the first signal power and the second signal power.

FIG. 1 is a block diagram illustrating a mobile communications device in accordance with one embodiment of the present disclosure

FIGS. 2A and 2B illustrate flowcharts of methods in accordance with embodiments of the present disclosure;

FIG. 3 illustrates simulation results of RSRQ values;

FIG. 4 illustrates a block diagram illustrating a mobile communications device in accordance with one embodiment of the present disclosure; and

FIG. 5 illustrates a block diagram of a mobile communications device described in the present application.

Like reference numerals are used in the drawings to denote like elements and features.

Example embodiments described below refer to a mobile communications device such as a cellular telephone, smartphone, a PDA (personal digital assistant) enabled for wireless communication or other mobile computing device supporting cellular communications which communicates voice, data or voice and data signals with a radio access network. References are made to Evolved Universal Terrestrial Radio Access (E-UTRA) or Long Term Evolution (LTE™) network standards and terminology but it should be understood that the present disclosure is not limited to a particular communications system or standard.

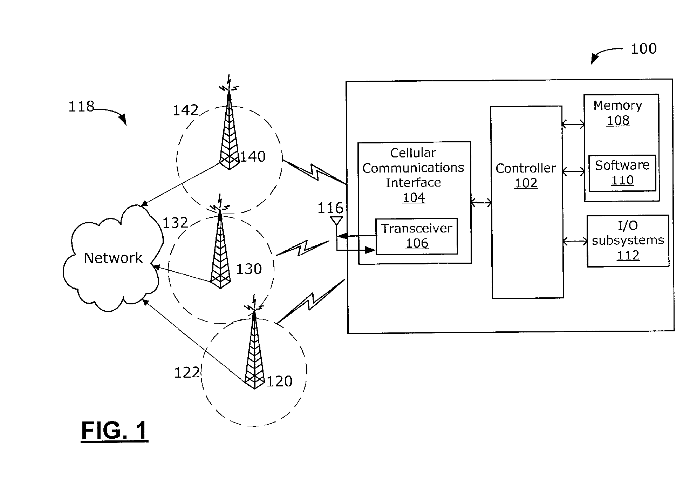

FIG. 1 illustrates a mobile communications device 100 in which example embodiments described in the present disclosure can be applied. Depending on the functionality provided by the mobile communications device 100, in various embodiments, the device may be a multiple-mode communications device configured for both data and voice communication. The mobile communications device 100 also may be referred to as user equipment (UE) or a mobile station.

The mobile communications device 100 includes a controller 102 such as a microprocessor, which controls the overall operation of the mobile communications device 100 and a cellular communication interface 104 including a transceiver 106. The controller 102 interacts with other device components such as memory 108, system software 110 stored in memory 108 and input/output subsystems 112.

The cellular communication interface 104 provides for cellular communications between the mobile communications device 100 through a cellular communications network 118 to other systems or devices. The cellular communications network 118 includes a plurality of base stations 120, 130, 140 which form part of and provide radio access to the cellular communications network 118 and higher level network components, other networks and other devices (not shown). A connection may be established between the mobile communications device 100 and a remote device (not shown) which need not necessarily be a similar device.

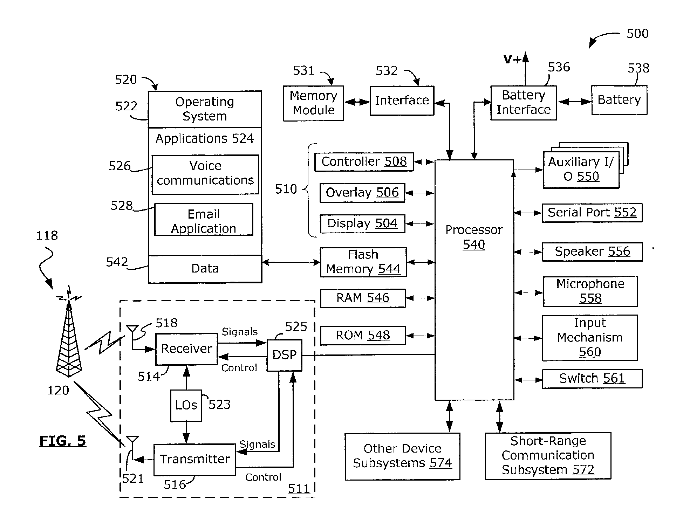

The cellular communication interface 104 includes a transceiver 106 which transmits and receives signals through antenna element 116 to establish a radio link with the communications network 118. The transceiver 106 includes a receiver, a transmitter and associated components as shown in the mobile communications device 500 of FIG. 5, such as local oscillators (LOs) 523, and a processing module such as a digital signal processor (DSP) 525. The antenna element 116 may be embedded or internal to the mobile communications device 100. The cellular communication interface 104 may support multiple transceivers 106 and multiple antenna elements 116. As will be apparent to those skilled in the field of communication, the particular design of the cellular communication interface 104 depends on the cellular communications network 118 in which mobile communications device 100 is intended to operate.

The mobile communications device 100 may communicate with any one of the plurality of fixed transceiver base stations 120, 130, 140 within its geographic coverage area. The base stations 120, 130, 140 provide service for geographic areas or cells 122, 132, 142 of the cellular communications network 118. The base station 120, 130, 140 also may be referred to as a Node B or evolved Node B (eNB). Three cells 122, 132, 142 are illustrated in FIG.1 although it will be understood that the mobile communications device 100 may receive signals from a number of base stations for a number of cells depending on the configuration and geography of the cellular communications network 118 and the location of the mobile communications device 100. The mobile communications device 100 selects a base station 120 and cell 122 suitable for accessing the network 118 and establishes a connection with the base station 120 in the cell 122 which is referred to as the "serving cell". The remaining non-serving cells 132, 142 are referred to as neighbouring cells.

The mobile communications device 100 may send and receive communication signals over the cellular communications network 118 with the base station 120 after the required network registration or activation procedures have been completed. Signals received by the antenna 116 through the cellular network 118 are input to the transceiver 106, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the transceiver 106. In a similar manner, signals to be transmitted are processed, including modulation and encoding, for example, by the transceiver 106. These processed signals are input to the transmitter for digital-to-analog (D/A) conversion, frequency up conversion, filtering, amplification, and transmission to the cellular communications network 118 via the antenna 116.

As the mobile communications device 100 moves in the cellular communications network 118 and as network performance and quality vary, a new cell such as cell 132, referred to as a target cell, may be selected to act as the serving cell in order to maintain communications or provide better quality communications between the mobile communications device 100 and the cellular communications network 118. Cell selection, reselection and handover of the connection between the mobile communications device 100 from a serving cell to a target cell are managed by the mobile communications device 100, the base station 120, 130, 140, higher level network components or a combination of the mobile communications device 100, the base station 120, 130, 140 and higher level network components.

The mobile communications device 100 collects and determines measurements of physical layer characteristics of the downlink signals received from the base station 120 in the serving cell 122 as well as measurements of physical layer characteristics of downlink signals received from the base stations 130, 140 in the neighbouring cells 132, 142. Measurements are reported by the mobile communications device 100 to the base station 120 in order to assist the base station 120 and cellular communications network 118 in a number of functions including but not limited to managing radio resources and determining whether a cell handover should be implemented. Based on the reported measurements, communications to negotiate a handover may be initiated and handover of the mobile communications device 100 from the base station 120 of the serving cell 122 to the base station 130 of the target cell 132 may be performed.

Measurements are determined by the mobile communications device 100 according to configuration information provided by the base station 120 including network determined filter coefficients. The mobile communications device 100 collects various measurements and may apply one or more filters to the collected measurements prior to determining whether to report measurement values to the base station 120. The network determined filter coefficients may be varied depending on a number of factors including but not limited to the wireless channel characteristics, the number of mobile communications devices 100 served in a cell 122 or in a neighbouring cell 132, 142, the amount of traffic to the mobile communications devices 100, or inter-cell interference, or a combination of these factors. If the filter coefficient is zero, effectively no filtering is performed. Network determined filter coefficients specific to each mobile communications device 100 in a cell 122 are determined by the base station 120 and sent by the base station 120 to each mobile communications device 100. The same network determined filter coefficients may be sent to all mobile communications devices 100 in the cell 122.

In an E-UTRA cellular communications network 118, the mobile communications device 100 and the base station 120, 130, 140 support orthogonal frequency division multiplexing (OFDM) and multiple input, multiple output (MIMO) antenna technology for downlink data transmission. The downlink signal is divided into physical resource blocks which consist of X subcarriers for a duration of Y OFDM symbols. Typically, a resource block consists of 12 consecutive subcarriers for 6 or 7 OFDM symbols, the OFDM symbols comprising one slot approximately 0.5 msec in duration. A resource element represents a single subcarrier for one symbol period. The downlink channel includes a physical layer reference signal which is a product of an orthogonal sequence and a pseudo random number sequence and thus acts as a cell specific identifier. The reference signal is assigned to predetermined number of resource elements in the transmitted downlink channel.

The transceiver 106 is configured to measure the strength and quality of downlink signals, including the reference signal, received from the one or more base stations 120, 130, and 140. Measurements made or determined by the mobile communications device 100 include but are not limited to a reference signal received power (RSRP) measurement, a carrier received signal strength measurement (RSSI) and a reference signal received quality (RSRQ) measurement, which are defined in the E-UTRA standard for Physical Layer Measurements, 3GPP TS 36.214. The RSRP is a received signal strength type of measurement and is defined as the linear average of the power contributions in watts (W) of the resource elements that carry cell specific reference signals within the considered measurement frequency bandwidth. As defined in the 3GPP TS 36.214 specification, the number of resource elements within the considered measurement frequency bandwidth and within the measurement period that are used by the mobile communications device 100 to determine the RSRP measurement is determined by the mobile communications device 100, subject to meeting E-UTRA measurement accuracy requirements. The carrier RSSI comprises the linear average of the total received power in watts (W) observed only in OFDM symbols containing reference symbols for antenna port 0 in the measurement bandwidth over N number of resource blocks. The carrier RSSI represents the total received power and noise from all sources on the same carrier, including co-channel serving

and non-serving cells, adjacent channel interference and thermal noise. The RSRQ

is a signal quality or signal to interference type of ratio and is defined as the ratio of RSRP, multiplied by the total number of resource blocks (N), to the carrier RSSI. Thus, the measurements in the numerator and denominator of the RSRQ ratio are made over the same set of resource blocks.

In the E-UTRA cellular communications network 118, the mobile communications device 100 performs neighbouring cell measurements and measurement reporting and controls procedures such as cell selection and reselection. The measurements which are collected, processed and reported by the mobile communications device 100 and which are used by the mobile communications device 100 and the base station 120 for cell selection, reselection and handover procedures depend on the state of the connection between the mobile communications device 100 and the base station 120 at the radio resource control (RRC) layer. The RRC layer handles layer three signalling between the mobile communications device 100 and the base station 120 and may be in an RRC_IDLE or RRC_CONNECTED state. In the RRC_IDLE state, no RRC layer connection exists between the mobile communications device 100 and the base station 120, 130, 140. In the RRC_IDLE state, RSRP is used by the mobile communications device 100 for cell selection and reselection procedures. In the RRC_CONNECTED state, a connection exists between the RRC layer of the base station 120 and the RRC layer of the mobile communications device 120. In the RRC_CONNECTED state, RSRQ, or RSRP, or both RSRQ and RSRP are used by the base station 120 for handover procedures. The carrier RSSI is used in determining the RSRQ measurement but currently is not required by E-UTRA specifications to be reported to the base station 120.

In one embodiment, the mobile communications device 100 collects, processes and reports measurement information in accordance with a measurement configuration provided by the base station 120 according to the E-UTRA specifications. The mobile communications device 100 may be requested to perform intra-frequency measurements at the downlink carrier frequency of the serving cell 122 and inter-frequency measurements at frequencies that differ from the downlink carrier frequency of the serving cell 122. Thus, multiple instances of measurement quantities such as RSRP and RSRQ may be determined and reported for one or more carrier frequencies of the serving cell 122 or target cell 132 along with cell identity information. Measurement configuration includes reporting configurations which identify the reporting criteria that trigger the mobile communications device 100 to send a measurement report, such as a periodic report or a report for a single event, and the report format including an identification of measurement quantities, such as RSRP and RSRQ, and associated information, such as the number of cells for which to report. Measurement identities, quantity configuration including associated filtering and network determined filter coefficients used for event evaluation, and measurement gaps, or periods that the mobile communications device 100 may use to perform measurements, also are provided.

For the E-UTRA cellular communications network 118, filtering of the collected samples for RSRP and carrier RSSI measurements at the physical layer or layer 1 is embodiment specific and determined by the mobile communications device 100. The E-UTRA standards specify a higher layer or layer 3 type of filter is to be applied to the RSRP and RSRQ measurements before using the measurements for evaluation of reporting criteria and for measurement reporting by the mobile communications device 100 to the base station 120. In the RRC-IDLE state, the type of layer 3 filter applied to RSRP and RSRQ may be determined by the mobile communications device 100. In the RRC_CONNECTED state, the layer 3 filter type is provided by the formula:

$$F_n = (1 - a) \bullet F_{n-1} + a \bullet M_n$$

where
$F_n$ = the updated filtered measured result;
$M_n$ = the latest received measurement from the physical layer or layer 1 filter;
$F_{n-1}$ = the older filtered measurement result; and
$a = 2^{-k/4}$ where k is the network determined filter coefficient for the corresponding measurement quantity, such as RSRQ or RSRP.

$F_0$ is set to $M_1$ when the first measurement result from the physical layer is received. The network determined filter coefficient k is sent from the base station 120 to the mobile communications device 100 with the measurement configuration information. A network determined filter coefficient of k = 0 indicates that no layer 3 filtering is performed.

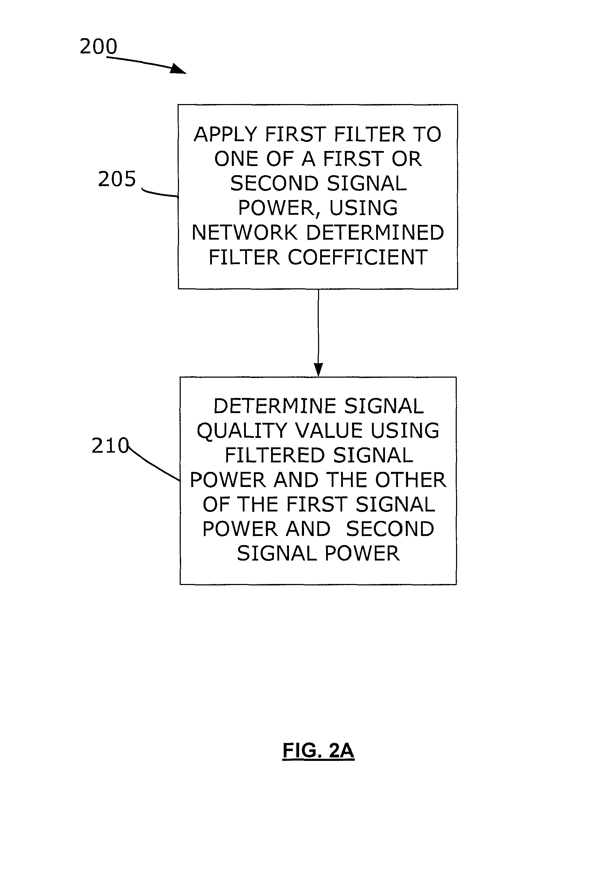

FIG. 2A illustrates a method 200 of determining a signal quality value in a mobile communications device 100 according to one embodiment of the present disclosure. At 205 a first filter is applied to one of a first signal power or a second signal power to create a filtered signal power. The first filter comprises a network determined filter coefficient. At 210, a signal quality value is determined using the filtered signal power and the other of the first signal power and second signal power. In one embodiment, the signal quality value is determined as a ratio of the filtered signal power and the other of the first signal power and second signal power. Specifically, the signal quality value ratio may be determined as the ratio with the filter being applied to either the numerator or denominator. In another embodiment, a second filter comprising a second network determined filter coefficient is applied to the second signal power prior to determining the signal quality value. The first and second filters may have the same or different filter structures.

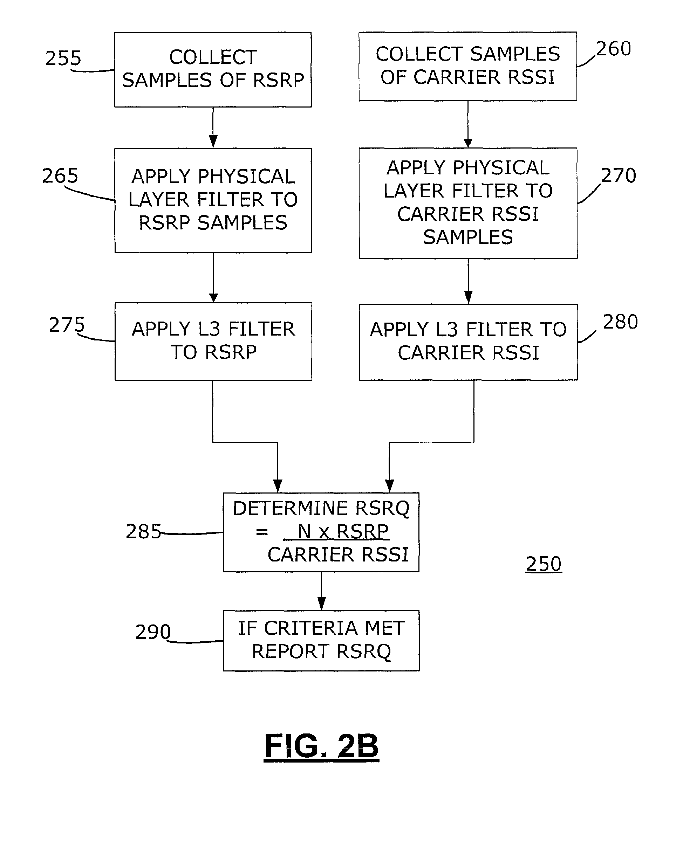

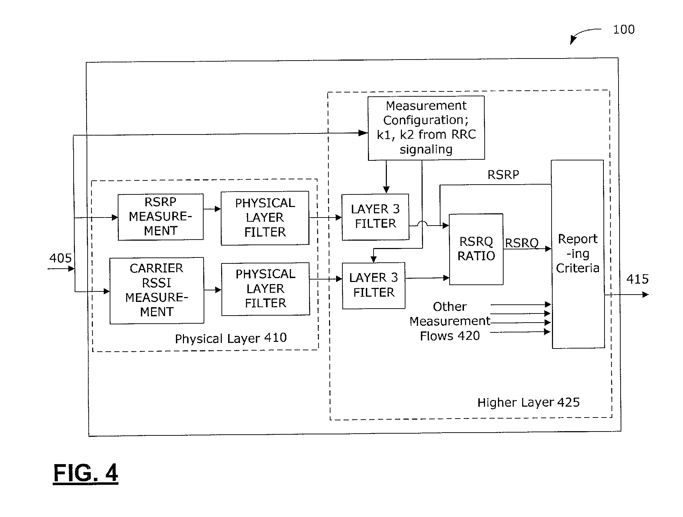

FIG. 2B illustrates a method 250 of determining and reporting the RSRQ measurement quantity according to another embodiment of the present disclosure which also is illustrated in the block diagram of FIG. 4. The RSRQ measurement is determined by collecting samples of RSRP at 255 and collecting samples of carrier RSSI measurements at 260. In one embodiment, first and second physical layer filters are applied to the collected RSRP and carrier RSSI values at 265, 270. A first layer 3 filter is applied to one of the signal powers, such as the RSRP at 275 or the carrier RSSI at 280. The method includes determining a signal quality value at 285 using the carrier RSSI and the RSRP, specifically, the RSRQ ratio of the RSRP, times the number of resource blocks (N), to the carrier RSSI, wherein a layer 3 filter has been applied to either of the RSRP or the carrier RSSI. In one embodiment, the first layer 3 filter is applied to RSRP and a second layer 3 filter is applied to the carrier RSSI. In another embodiment, the first and second filters comprise network determined filter coefficients. In one embodiment, at 290 if reporting criteria are met, the RSRQ value is transmitted from the mobile communications device 100 to the base station 120. Additional information as identified in the measurement configuration, such as cell identity information, also is transmitted from the mobile communications device 100 to the base station 120. Multiple values of RSRQ may be determined according to the method 250 for the serving cell 122 and neighbouring cells 132, 142 and reported to the base station 120.

With reference to FIG. 2B, at 255, samples of the RSRP measurement quantity of the downlink signal are collected by the mobile communications device 100. At 260, samples of the carrier RSSI measurement quantity are collected. In one embodiment, a linear average function is applied at this stage to filter out effects such as fast fading and is referred to as a physical layer or layer 1 filter. Physical layer or layer 1 filters are applied by the transceiver 106 to each of the collected samples of the RSRP and carrier RSSI measurements at 265 and 270. Examples of the filter types or structures which may be applied as the physical layer filter include but are not limited to a linear average function, an infinite impulse response (IIR) filter, accumulator or integrator. The same or different physical layer filters may be applied to each of the RSRP and carrier RSSI measurements. The collection of RSRP and carrier RSSI measurements at 255, 260 and layer 1 filtering at 265, 270 typically is performed by the transceiver 106 in the cellular communications interface 104.

At 275, in one embodiment of the invention, the layer 3 filter structure as specified by the E-UTRA specification is applied to the RSRP result from the layer 1 filter and at 280, the layer 3 filter structure as specified by the E-UTRA specification is applied to the carrier RSSI result from the layer 1 filter. In one embodiment, only a single layer 3 filter is used and is applied to either the RSRP or carrier RSSI after the respective physical layer filter.

As described above, the layer 3 filter structure is specified for the E-UTRA cellular communications network 118. A separate network determined filter co-efficient k is provided for each of the RSRP and RSRQ measurement quantities, identified herein as $k_1$ and $k_2$ respectively. Since the carrier RSSI is not reported to the base station 120, a network determined coefficient k for a layer 3 filter for the carrier RSSI is not specified in E-UTRA networks. In one embodiment of the invention, the filter coefficient $k_1$ determined by the network for RSRP is used for the layer 3 filter for the RSRP result from 265 and the filter coefficient $k_2$ determined by the network for RSRQ is used for the layer 3 filter for the carrier RSSI result from 270.

Thus, the layer 3 filter for RSRP is given by:

$$F\_RSRP_n = (1- a_1) \bullet F\_RSRP_{n-1} + a_1 \bullet M\_RSRP_n$$

where $F\_RSRP_n$ = the updated filtered measured RSRP result at time n;
$F\_RSRP_{n-1}$ = the older filtered measurement result for RSRP at time n - 1;
and
$M\_RSRP_n$ = the latest layer 1 filtered RSRP value at time n; and
$a_1 = 2^{-k1/4}$ where $k_1$ is the network determined filter coefficient for the RSRP measurement.

The layer 3 filter for the carrier RSSI is given by:

$$F\_RSSI_n = (1- a_2) \bullet F\_RSSI_{n-1} + a_2 \bullet M\_RSSI_n$$

where $F\_RSSI_n$ = the updated filtered measured carrier RSSI result at time n;
$F\_RSSI_{n-1}$ = the older filtered measurement result for carrier RSSI at time n - 1;
$M\_RSSI_n$ = the filtered carrier RSSI value at time n; and
$a_2 = 2^{-k_2/4}$ where $k_2$ is the network determined filter coefficient for the RSRQ measurement.

In one embodiment of the invention, the network determined filter coefficient $k_1$ for RSRQ may be the same as the network determined filter coefficient $k_2$ for RSRP. In another embodiment of the invention, two different filter coefficients $k_1$ and $k_2$ may be determined by the network 118, so that the RSRQ and RSRP measurement quantities are filtered using the same filter structure but with different filter coefficients. For example, different filter coefficients may be signalled by the cellular communications network 118 when RSRQ is reported with a measurement period that is different than the measurement period for RSRP. Typically, the RSRQ measurement quantity has more fluctuations than RSRP and hence is filtered more heavily and a smaller layer 3 filter coefficient is expected to be used for the RSRQ measurement quantity.

In another embodiment, different layer 3 filter types, including but not limited to an FIR filter such as a sliding window or moving average filter, an IIR filter, an accumulator or an integrator may be applied to the RSRP and carrier RSSI measurement quantities. For example, different filter types may be used in a scenario where there is narrow-band interference which affects the carrier RSSI but which does not affect the RSRP, such as where the interference is not at the subcarrier frequencies used for the reference signals so that the RSRP measurement is not affected.

The RSRQ measurement quantity is determined at 285 as the ratio of the filtered RSRP result from 275 multiplied by the number of resource blocks (N) of the carrier RSSI measurement bandwidth, over the filtered carrier RSSI result from 280. The RSRQ measurement quantity may be determined using the layer 3 filtered RSRP value determined at 275 and the layer 3 filtered carrier RSSI determined at 280; or the layer 3 filtered RSRP value determined at 275 and the physical layer filtered carrier RSSI determined at 270; or the physical layer filtered RSRP value determined at 265 and the layer 3 filtered carrier RSSI determined at 280.

At 290, if reporting criteria, such as criteria specified in the measurement configuration provided by the base station 120 according to the E-UTRA specifications, are met, the RSRQ measurement quantity determined at 285 is transmitted from the mobile communications device 100 to the base station 120. In one embodiment, the RSRQ value which is used to evaluate reporting criteria and which is transmitted to the base station 120 is based on the ratio of the RSRP and carrier RSSI values to which layer 3 filters have been applied at 275, 280. An additional layer 3 filter is not applied to the RSRQ ratio. Due to the use of separate layer 3 filtering on the numerator RSRP and the denominator carrier RSSI, short term fluctuations which may arise in the RSRQ value due to fading, interference and noise, and in particular in low signal to noise ratio scenarios, are reduced more effectively than the use of one layer 3 filter on an RSRQ ratio based on RSRP and carrier RSSI measurements. Separate filtering reduces the RSRQ measurement error. Since the layer 3 filter coefficients determined in an E-UTRA network are used to filter the RSRP and carrier RSSI, the time interval over which the RSRP and carrier RSSI are filtered for the RSRQ calculation meets the expectation of the E-UTRA networks.

The type and number of measurements determined and sent by the mobile communications device 100 are based on the measurement configuration provided by the base station 120 as described above. Typically, the RSRQ and RSRP values for the serving cell 120 are transmitted to the base station 120 along with cell identity information. The RSRQ and RSRP values determined according to the method 250 for a specified number of neighbouring cells 132, 142 along with cell identity information also may be transmitted to the base station 120.

Reporting of measurements from the mobile communications device 100 to the base station 120 also is based on the measurement configuration and may be periodic or event triggered. Periodic reports may be sent for a specified duration of time, including an infinite duration. A trigger may be based on the absolute values of RSRQ or RSRP falling below predetermined thresholds or based on the relative values of the RSRQ and RSRP of the serving cell 122 compared to RSRQ and RSRP measurements of neighbouring cells 132, 142.

Where RSRQ values are reported on a periodic basis, decreased fluctuations in RSRQ values improve the accuracy of the RSRQ measurement used by the base station 120. Where RSRQ values are reported on an event triggered basis, decreased fluctuations in RSRQ values reduce the number of reports which may be sent and the number of transmissions or bandwidth needed in the uplink from the mobile communications device 100 to the base station 120. For example, as the mobile communications device 100 moves away from the serving cell 122 and towards a neighbouring or target cell 132, the RSRQ of the serving cell 122 decreases and the RSRQ of the target cell 132 increases. The mobile communications device 100 may be configured to transmit measurement information to the base station 120 for the criteria where the RSRQ of the target cell 132 exceeds the RSRQ of the serving cell 122. However, fluctuations in the RSRQ values of both the serving cell 122 and target cell 132 may result in the criteria being met a number of times as the RSRQ of the target cell 132 exceeds and then falls below the RSRQ of the serving cell. Thus, reducing fluctuations of the value of RSRQ reduces the number of times reporting criteria may be met and reduces the bandwidth needed by the mobile communications device 100 to transmit measurement information to the base station 120. As well, actions taken by the base station 120 as a result of the reported RSRQ values, such as initiating negotiations to handover a connection or performing a handover of a connection from the base station 120 of the serving cell 122 to a base station 130 of neighbouring or target cell 132 are reduced. The ping-pong effect of excessive handover initiations and possible handover cancellation due to fluctuations in RSRQ are reduced as a result of the improved filtering of the RSRQ value.

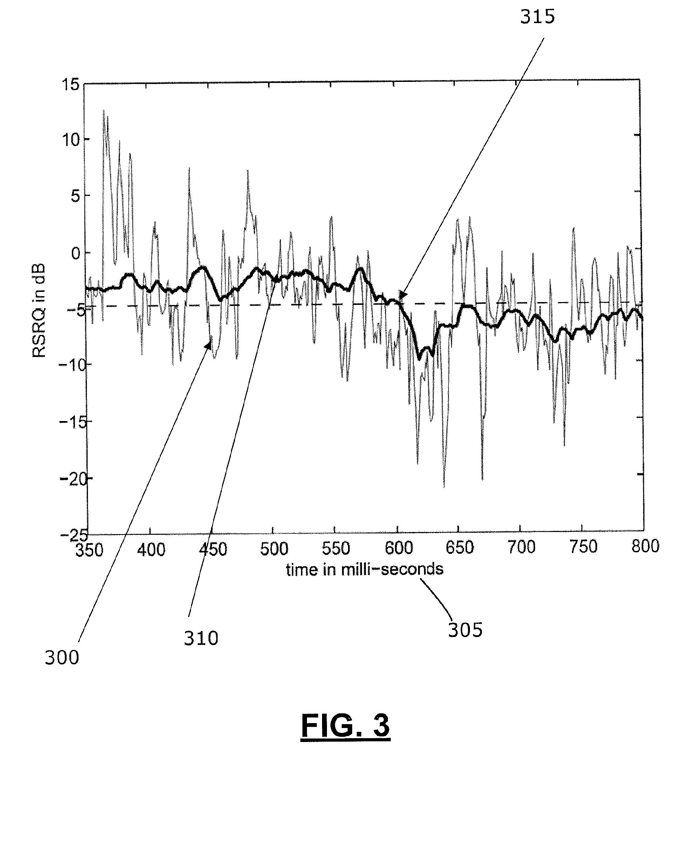

FIG. 3 illustrates simulation results of an RSRQ value determined according to the present disclosure. RSRQ values 300 determined according to known methods for downlink signals received by the mobile communications device 100 from the serving cell 122 and from target cell 132 are shown over time 305. Significant fluctuations are shown in the RSRQ value 300 as, for example, the mobile communications device 100 moves from the serving cell 122 to the target cell 132. A number of RSRQ reports may be generated and sent from the mobile communications device 100 to the base station 120 as the RSRQ value 300 falls below a predetermined value, such as -5dB, and then exceeds the predetermined value. A first report may cause the base station 120 to negotiate and initiate a handover of the mobile communications device to another base station 122. A subsequent report, triggered by the RSRQ value 300 exceeding the predetermined value, may cause the base station 120 to cancel the handover negotiations. Fluctuations in the RSRQ value 300 may cause an increase in the reporting of RSRQ values by the mobile communications device 100, an increase in the initiation of handover negotiations by the base station 120 and an increase in the number of completed handovers of the mobile communications device 100 from the base station 120 to a new base station 122 as well as handovers of the mobile communications device 100 from the base station 122 back to the base station 120.

FIG. 3 also illustrates RSRQ values 310 determined according to the method 250 for downlink signals received by the mobile communications device 100 from the serving cell 122 and from target cell 132 shown over time 305. In the embodiment illustrated in FIG. 3, a layer 3 filter having a network determined coefficient is applied to the RSRP value and a layer 3 filter having a network determined coefficient is applied to the carrier RSSI value in determining the RSRQ 310. Fluctuations in the RSRQ values 310 are reduced which results in reporting criteria being met once and, for example, a single RSRQ report being sent to the base station 120 at 315. Thus, handover negotiations will be initiated to switch the mobile communications device 100 from the serving cell 122 to the target cell 132 once.

A block diagram of the measurement collection, filtering and reporting of RSRP and RSRQ measurements is provided in FIG. 4. As described with respect to the method 250 illustrated in FIG. 2B, RSRP and carrier RSSI measurement values are collected for downlink signals 405 received from base stations 120, 130, 140. Physical layer or layer 1 filters are applied at a physical layer 410. One or two layer 3 filters are applied to one or both of the RSRP and carrier RSSI values from the physical layer filters, based on measurement configuration and network determined filter coefficients $k_1$ and $k_2$ received with RRC signalling information from the base station 120. In one embodiment, the RSRQ ratio is determined based on the layer 3 filtered RSRP and layer 3 filtered carrier RSSI values as well as the number of resource blocks N of the carrier RSSI measurement. If reporting criteria are met, such as reporting criteria for the RSRQ measurement, the RSRQ and RSRP values are transmitted in an uplink transmission 415 to the base station 120. The reporting criteria are evaluated based on a number of measurement flows 420 and measurement values, such as RSRQ and RSRP values for a number of cells 122, 132, 142.

As illustrated in FIG. 4, the layer 3 filters, RSRQ determination and evaluation of the reporting criteria are performed as higher layer functions in the mobile communications device 100. In one embodiment of the invention, the physical layer filtering and layer 3 filtering may be combined and performed in one place, such as the transceiver 106 of the cellular communications interface 104. From FIG. 4 it can be seen that the resources required to determine the RSRP, carrier RSSI and RSRQ values and to report the RSRP and RSRQ values according to the present invention are not significantly increased. A layer 3 filter is applied to the RSRP measurement before reporting of the RSRP measurement to the base station 120 in accordance with the E-UTRA standard. Rather than applying a layer 3 filter to the RSRQ value, the layer 3 filter is applied to the carrier RSSI. Thus, the number of embodiments of a layer 3 filter structure is not increased.

In one embodiment, the mobile communications device 100 and software 110 may be configured to permit selection of the determination and reporting of the RSRQ value based on the known prior methods with a layer 3 filter applied only to the ratio calculated for RSRQ or based on the methods 200 or 250 of the present invention. The mobile communications device 100 also may be configured for E-UTRA networks to apply the method 250 in the RRC_CONNECTED state, in the RRC_IDLE state which permits embodiment specific filtering as determined by the mobile communications device 100, or in both the RRC CONNECTED and RRC_IDLE states.

It will be appreciated that for cellular communications networks 118 implemented according to other standards and technologies such as universal mobile telecommunications system (UMTS), UTRA FDD, code division multiple access (CDMA) and IEEE 802.16 wireless networks or Worldwide Interoperability for Microwave Access (WiMAX™), the method 200 of the present disclosure similarly may be applied to measurement values which are determined as a ratio of two physical layer measurements. In one embodiment, the method 200 is applied to the determination of CPICH_Ec/Io in UTRA FDD networks. The CPICH_Ec/Io represents the received energy per chip to the total received power spectral density at the mobile communications device 100 antenna connector (not shown). For a mobile communications device 100 that is able to simultaneously receive signals from more than one carrier, CPICH_Ec/Io is defined for each carrier individually. Io is the total received power density, including signal and interference, as measured at the mobile communications device 100 antenna connector (not shown). In another embodiment, the method 200 is applied to the carrier to interference plus noise ratio (CINR) of IEEE 802.16 wireless networks. CINR represents the ratio of the sum of the signal power and the sum of residual error.

FIG. 5 illustrates one embodiment of a mobile communications device 500 in which example embodiments described in the present disclosure can be applied. The mobile communications device 500 shown in FIG. 5 is an exemplary embodiment of the mobile communications device 100 described with reference to FIG. 1.

The mobile communication device 500 is a two-way communication device having at least data and possibly also voice communication capabilities, and the capability to communicate with other computer systems, for example, via the Internet. Depending on the functionality provided by the mobile communication device 500, in various embodiments the device may be a data communication device, a multiple-mode communication device configured for both data and voice communication, a smartphone, a mobile telephone or a PDA (personal digital assistant) enabled for wireless communication, or a computer system with a wireless modem.

The mobile communication device 500 includes a controller comprising at least one processor 540 such as a microprocessor which controls the overall operation of the mobile communication device 500, and a cellular communication subsystem 511 for exchanging radio frequency signals with the cellular communications network 118. The processor 540 interacts with the communication subsystem 511 which performs communication functions. The processor 540 interacts with additional device subsystems including a display (screen) 504, such as a liquid crystal display (LCD) screen, with a touch-sensitive input surface or overlay 506 connected to an electronic controller 508 that together make up a touchscreen display 510. The touch-sensitive overlay 506 and the electronic controller 508 provide a touch-sensitive input device and the processor 540 interacts with the touch-sensitive overlay 506 via the electronic controller 508.

The processor 540 interacts with additional device subsystems including flash memory 554, random access memory (RAM) 546, read only memory (ROM) 548, auxiliary input/output (I/O) subsystems 550, data port 552 such as serial data port, such as a Universal Serial Bus (USB) data port, speaker 556, microphone 258, control keys 560, switch 561, short-range communication subsystem 572, and other device subsystems generally designated as 574. Some of the subsystems shown in FIG. 5 perform communication-related functions, whereas other subsystems may provide "resident" or on-device functions.

The communication subsystem 511 includes a receiver 514, a transmitter 516, and associated components, such as one or more antenna elements 518 and 521, local oscillators (LOs) 523, and a processing module such as a digital signal processor (DSP) 525. The antenna elements 518 and 521 may be embedded or internal to the mobile communication device 500 and a single antenna may be shared by both receiver and transmitter, as is known in the art and as illustrated in the mobile communications device 100 of FIG. 1. As will be apparent to those skilled in the field of communication, the particular design of the wireless communication subsystem 511 depends on the cellular communications network 118 in which the mobile communications device 500 is intended to operate.

The mobile communication device 500 may communicate with any one of a plurality of fixed transceiver base stations 120, 130, 140 of the cellular communications network 118 within its geographic coverage area. The mobile communication device 500 may send and receive communication signals over the cellular communications network 118 after the required network registration or activation procedures have been completed. Signals received by the antenna 518 through the cellular communications network 118 are input to the receiver 514, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 525. In a similar manner, signals to be transmitted are processed, including modulation and encoding, for example, by the DSP 525. These DSP-processed signals are input to the transmitter 516 for digital-to-analog (D/A) conversion, frequency up conversion, filtering, amplification, and transmission to the cellular network 118 via the antenna 521. The DSP 525 not only processes communication signals, but may also provide for receiver and transmitter control. For example, the gains applied to communication signals in the receiver 514 and the transmitter 516 may be adaptively controlled through automatic gain control algorithms implemented in the DSP 525.

The processor 540 operates under stored program control and executes software modules 520 stored in memory such as persistent memory, for example, in the flash memory 544. The software modules 520 comprise operating system software 522 and software applications 524. The software applications 524 may include a range of applications, including, a voice communication (i.e. telephony) application 526 and an email message application 528. The software applications may include an address book application, a messaging application, a calendar application, and/or a notepad application, a push content viewing application, a web browser application, a map application, and a media player application (not shown). The software applications 524 may among other things, each be implemented through stand-alone software applications, or combined together in one or more of the operating system 522 or one or more of the other software applications 524. In some embodiments, the functions performed by each of the above identified modules may be realized as a plurality of independent elements, rather than a single integrated element, and any one or more of these elements may be implemented as parts of other software applications.

Those skilled in the art will appreciate that the software modules 520 or parts thereof may be temporarily loaded into volatile memory such as the RAM 546. The RAM 546 is used for storing runtime data variables and other types of data or information, as will be apparent to those skilled in the art. Although specific functions are described for various types of memory, this is merely an example, and those skilled in the art will appreciate that a different assignment of functions to types of memory could also be used.

In some embodiments, the auxiliary input/output (I/O) subsystems 550 may comprise an external communication link or interface, for example, an Ethernet connection. The mobile communication device 500 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 550 may comprise a vibrator for providing vibratory notifications in response to various events on the mobile communication device 500 such as receipt of an electronic communication or incoming phone call, or for other purposes such as haptic feedback (touch feedback).

In some embodiments, the mobile communication device 500 also includes a removable memory card 531 (typically comprising flash memory) and a memory card interface 532. Network access typically associated with a subscriber or user of the mobile communication device 500 via the memory card 531, which may be a Subscriber Identity Module (SIM) card for use in a GSM network or other type of memory card for use in the relevant wireless network type. The memory card 531 is inserted in or connected to the memory card interface 532 of the mobile communication device 500 in order to operate in conjunction with the cellular network 118.

The mobile communication device 500 stores data 542 in an erasable persistent memory, which in one example embodiment is the flash memory 544. In various embodiments, the data 542 includes service data comprising information required by the mobile communication device 500 to establish and maintain communication with the cellular network 118. The data 542 may also include user application data such as email messages, address book and contact information, calendar and schedule information, notepad documents, image files, and other commonly stored user information stored on the mobile communication device 500 by its user, and other data. The data 542 stored in the persistent memory (e.g. flash memory 544) of the mobile communication device 500 may be organized, at least partially, into a number of databases each containing data items of the same data type or associated with the same application. For example, email messages, contact records, and task items may be stored in individual databases within the device memory.

The serial data port 552 may be used for synchronization with a user's host computer system (not shown). The serial data port 552 enables a user to set preferences through an external device or software application and extends the capabilities of the mobile communication device 500 by providing for information or software downloads to the mobile communication device 500 other than through the cellular network 118. The alternate download path may, for example, be used to load an encryption key onto the mobile communication device 500 through a direct, reliable and trusted connection to thereby provide secure device communication.

In some embodiments, the mobile communication device 500 is provided with a service routing application programming interface (API) which provides an application with the ability to route traffic through a serial data (i.e., USB) or Bluetooth® connection to the host computer system using standard connectivity protocols. When a user connects their mobile communication device 500 to the host computer system via a USB cable or Bluetooth® connection, traffic that was destined for a wireless network (not shown) is automatically routed to the mobile communication device 500 using the USB cable or Bluetooth® connection. Similarly, any traffic destined for the wireless network is automatically sent over the USB cable Bluetooth® connection to the host computer system for processing.

The mobile communication device 500 also includes a battery 538 as a power source, which is typically one or more rechargeable batteries that may be charged, for example, through charging circuitry coupled to a battery interface such as the serial data port 552. The battery 538 provides electrical power to at least some of the electrical circuitry in the mobile communication device 500, and the battery interface 536 provides a mechanical and electrical connection for the battery 538. The battery interface 536 is coupled to a regulator (not shown) which provides power V+ to the circuitry of the mobile communication device 500.

The short-range communication subsystem 572 is an additional optional component which provides for communication between the mobile communication device 500 and different systems or devices, which need not necessarily be similar devices. For example, the subsystem 572 may include an infrared device and associated circuits and components, or a wireless bus protocol compliant communication mechanism such as a Bluetooth® communication module to provide for communication with similarly-enabled systems and devices (Bluetooth® is a registered trademark of Bluetooth SIG, Inc.).

A predetermined set of applications that control basic device operations, including data and possibly voice communication applications will normally be installed on the mobile communication device 500 during or after manufacture. Additional applications and/or upgrades to the operating system 522 or software applications 524 may also be loaded onto the mobile communication device 500 through the cellular network 118, the auxiliary I/O subsystem 550, the serial port 552, the short-range communication subsystem 572, or other suitable subsystems 574 or other wireless communication interfaces. The downloaded programs or code modules may be permanently installed, for example, written into the program memory (i.e. the flash memory 544), or written into and executed from the RAM 546 for execution by the processor 540 at runtime. Such flexibility in application installation increases the functionality of the mobile communication device 500 and may provide enhanced on-device functions, communication-related functions, or both. For example, secure communication applications may enable electronic commerce functions and other such financial transactions to be performed using the mobile communication device 500.

The mobile communication device 500 may include a personal information manager (PIM) application having the ability to organize and manage data items relating to a user such as, but not limited to, instant messaging, email, calendar events, voice mails, appointments, and task items. The PIM application has the ability to send and receive data items via the wireless network. In some example embodiments, PIM data items are seamlessly combined, synchronized, and updated via the wireless network, with the user's corresponding data items stored and/or associated with the user's host computer system, thereby creating a mirrored host computer with respect to these data items.

The mobile communication device 500 may provide two principal modes of communication: a data communication mode and an optional voice communication mode. In the voice communication mode, the mobile communication device 500 provides telephony functions and operates as a typical cellular phone. The overall operation is similar, except that the received signals would be output to the speaker 556 and signals for transmission would be generated by a transducer such as the microphone 558. The telephony functions are provided by a combination of software/firmware (i.e., the voice communication module) and hardware (i.e., the microphone 558, the speaker 556 and input devices). Alternative voice or audio I/O subsystems, such as a voice message recording subsystem, may also be implemented on the mobile communication device 500. Although voice or audio signal output is typically accomplished primarily through the speaker 556, the display device 504 may also be used to provide an indication of the identity of a calling party, duration of a voice call, or other voice call related information.

In the data communication mode, a received data signal such as a text message, an email message, or web page download will be processed by the communication subsystem 511 and input to the processor 540 for further processing. For example, a downloaded web page may be further processed by a web browser module to parse the HTML structure and format of the web page and output the web page to the display 510. An email message may be processed by an email message module 528 and output to the display 510. A user of the mobile communication device 500 also may compose data items, such as email messages, for example, using the touch-sensitive overlay 506 in conjunction with the display device 504 and possibly the control buttons 560 and/or the auxiliary I/O subsystems 550. These composed items may be transmitted through the communication subsystem 511 over the cellular communications network 118.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware circuits, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

**Claims**

1. A method in a mobile communications device (100), the method comprising:

    applying a first filter to one of a first signal power or a second signal power to create a filtered signal (205), the first filter comprising a first network determined coefficient; and determining a signal quality value using the filtered signal power and the other of the first signal power and the second signal power (210).

2. A method according to claim 1 wherein determining a signal quality value (210) comprises determining a ratio of the filtered signal power and the other of the first signal power and the second signal power.

3. A method according to claim 1, further comprising applying the first filter to the first signal power and applying a second filter comprising a second network determined coefficient to the second signal power, wherein determining the signal quality value (210) comprises determining the signal quality value using the filtered first signal power and the filtered second signal power.

4. A method according to any one of claims 1 to 3 wherein the first signal power comprises a reference signal received power (RSRP), the second signal power comprises a carrier received signal strength indicator (RSSI) and wherein determining the signal quality value (210) comprises determining a reference signal received quality (RSRQ).

5. A method according to claim 1 wherein the first signal power comprises a reference signal received power (RSRP) and the second signal power comprises a carrier received signal strength indicator (RSSI), the method further comprising applying the first filter to the RSRP (275), applying a second filter comprising a second network determined coefficient to the carrier RSSI (280) and multiplying the filtered RSRP by a number (N) of resource blocks of carrier RSSI measurement bandwidth prior to determining the RSRQ ratio of the filtered RSRP times N to the filtered carrier RSSI (285).

6. A method according to claim 5 wherein the filtered RSRP at time (n) is represented by the equation:

$$F\_RSRP_n = (1 - a_1) \bullet F\_RSRP_{n-1} + a_1 \bullet M\_RSRP_n$$

where $F\_RSRP_{n-1}$ = the filtered RSRP value at time n - 1;
$M\_RSRP_n$ = the RSRP value at time n; and
$a_1 = 2^{-k_1/4}$ where $k_1$ is the first network determined coefficient; and wherein the filtered carrier RSSI at time (n) is represented by the equation:

$$F\_RSSI_n = (1- a_2) \bullet F\_RSSI_{n-1} + a_2 \bullet M\_RSSI_n$$

where $F\_RSSI_{n-1}$ = the filtered carrier RSSI value at time n - 1;
$M\_RSSI_n$ = the carrier RSSI value at time n; and
$a_2 = 2^{-k_2/4}$ where $k_2$ is the second network determined coefficient.

7. A method according to claim 5 or claim 6 further comprising in response to the RSRQ ratio exceeding a predetermined value, transmitting the RSRQ ratio to a base station.

8. A method according to any one of claims 1 to 3 wherein the first signal power comprises a received energy per PN chip of a common pilot channel (CPICH_Ec) and the second signal power comprises a total received power density (Io).

9. A mobile communications device (100) comprising:

a transceiver (106) for connecting to a cellular communications network (118); and
the transceiver (106) being configured to: apply a first filter to one of a first
signal power or a second signal power to create a filtered signal, the first filter comprising a first network determined coefficient; and determine a signal quality value using the filtered signal power and the other of the first signal power and the second signal power.

10. A mobile communications device (100) according to claim 9 wherein the transceiver (106) is further configured to determine the signal quality value as a ratio of the filtered signal power and the other of the first signal power and the second signal power.

11. A mobile communications device (100) according to claim 9 wherein the transceiver (106) is further configured to apply the first filter to the first signal power and to apply a second filter to the second signal power, the second filter comprising a second network determined coefficient, and to determine the signal quality value using the filtered first signal power and the filtered second signal power.

12. A mobile communications device (100) according to claim 10 wherein the first signal power comprises a reference signal received power (RSRP), the second signal power comprises a carrier received signal strength indicator (RSSI) and wherein the transceiver (106) is configured to determine a reference signal received quality (RSRQ) using the filtered signal power and the other of the first signal power and the second signal power.

13. A mobile communications device (100) according to claim 12 wherein the transceiver (106) is further configured to: apply the first filter to the RSRP, apply a second filter having a network determined coefficient to the carrier RSSI, and to determine the RSRQ as a ratio of the filtered RSRP x N to the filtered carrier RSSI.

14. A mobile communications device (100) according to any one of claims 9 to 11 wherein the first signal power comprises a received energy per PN chip of a common pilot channel (CPICH_Ec) and the second signal power comprises a total received power density (Io).

15. A computer-readable storage medium in a mobile communications device (100), the medium having stored thereon computer-readable and computer-executable instructions, which, when executed by a transceiver (106), cause the mobile communications device (100) to perform the method of any one of claims 1 to 8.

**FIG. 1**

200

205

APPLY FIRST FILTER TO ONE OF A FIRST OR SECOND SIGNAL POWER, USING NETWORK DETERMINED FILTER COEFFICIENT

210

DETERMINE SIGNAL QUALITY VALUE USING FILTERED SIGNAL POWER AND THE OTHER OF THE FIRST SIGNAL POWER AND SECOND SIGNAL POWER

FIG. 2A

**FIG. 2B**

**FIG. 3**

**FIG. 4**

**FIG. 5**

Europäisches
Patentamt

European
Patent Office

Office européen
des brevets

# EUROPEAN SEARCH REPORT

Application Number

EP 10 19 0713

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/112958 A1 (KRISHNAMURTHY SANDEEP H [US] ET AL) 6 May 2010 (2010-05-06)<br>* abstract *<br>* paragraphs [0003] - [0037] *<br>----- | 1-15 | INV.<br>H04B17/00 |
| X | MOTOROLA: "Layer 3 filtering in emergency handover situations",<br>3GPP DRAFT; R4-083024, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>no. Prague, Czech Republic; 20081105,<br>5 November 2008 (2008-11-05), XP050326226,<br>[retrieved on 2008-11-05]<br>* pages 1-3 *<br>----- | 1-15 | |
| A,D | "3rd Generation Partnership Project; Technical Specification Group Radio Access Network; Evolved Universal Terrestrial Radio Access (E-UTRA); Physical layer; Measurements (Release 9)",<br>3GPP STANDARD; 3GPP TS 36.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>no. V9.2.0, 14 June 2010 (2010-06-14),<br>pages 1-14, XP050441717,<br>[retrieved on 2010-06-14]<br>* pages 8-9 *<br>----- | 1-15 | TECHNICAL FIELDS SEARCHED (IPC)<br><br>H04B |

-/--

The present search report has been drawn up for all claims

| Place of search | Date of completion of the search | Examiner |
|---|---|---|
| Munich | 11 March 2011 | Helms, Jochen |

EPO FORM 1503 03.82 (P04C01)

Europäisches
Patentamt

European
Patent Office

Office européen
des brevets

# EUROPEAN SEARCH REPORT

Application Number

EP 10 19 0713

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUAWEI: "Consideration on measurement in CA", 3GPP DRAFT; R4-092821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050353994, [retrieved on 2009-08-18] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 11 March 2011 | Helms, Jochen |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 19 0713

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2011

| Patent document cited in search report | Publication date | Patent family member(s) | Publication date |
|---|---|---|---|
| US 2010112958 A1 | 06-05-2010 | NONE | |

EPO FORM P0459